Europäisches Patentamt

European Patent Office

Office européen des brevets

(19)

(11) Publication number: **0 370 980**
**A2**

(12) # EUROPEAN PATENT APPLICATION

(21) Application number: **89850375.0**

(22) Date of filing: **31.10.89**

(51) Int. Cl.5: **H02M 3/335**

(30) Priority: **24.11.88 JP 294727/88**

(43) Date of publication of application:
**30.05.90 Bulletin 90/22**

(84) Designated Contracting States:
**DE FR GB**

(71) Applicant: **International Business Machines Corporation**
**Old Orchard Road**
**Armonk, N.Y. 10504(US)**

(72) Inventor: **Kobayashi, Masaki**
**C-906, 1223 Yamazakicho**
**Machida-shi Tokyo-to(JP)**
Inventor: **Mori, Masaki**
**1-30-503 Fujinodai-danchi 3486 Honmachida**
**Machida-shi Tokyo-to(JP)**
Inventor: **Nakanishi, Hedeaki**
**2735-4 Naruse**
**Machida-shi Tokyo-to(JP)**

(74) Representative: **Johansson, Lars E. et al**
**IBM Svenska AB Intellectual Property**
**Department 4-01**
**S-163 92 Stockholm(SE)**

(54) **Power supply device and its use in a crt display apparatus.**

(57) A power supply device for a CRT display apparatus comprises a rectifying and smoothing circuit (12), which receives an alternating voltage and generates a DC bulk voltage connected to the inputs of first and second switching regulators. The switching frequency of the second regulator is N or 1/N times the switching frequency of the first switching regulator. N is an integer equal to or larger than 1.

FIG. 1

EP 0 370 980 A2

## POWER SUPPLY DEVICE AND ITS USE IN A CRT DISPLAY APPARATUS

### A. Field of the invention

The present invention relates to a switching regulator-type power supply unit and more particularly to a power supply unit used in a CRT display workstation including CRT display device, control units such as a personal computer, a printer, an auxiliary disk memory unit, an image scanning device and the like.

### B. Prior arts and problems

A switching regulator called a "switch mode power supply unit" has been widely employed as a stabilized DC power supply unit of the CRT display device of the display workstation, personal computer, etc. Such power supply unit comprises a rectifying and smoothing circuit which converts an alternating voltage input into a DC bulk voltage through a filter circuit, a switch pulse generator, a switching transistor which is serially connected with a primary winding of a transformer and chops the DC bulk voltage into a plurality of DC pulses through the control of the switching pulse, and an output rectifying and smoothing circuit connected with a secondary winding of the transformer. The power supply unit includes a feedback circuit. This circuit feeds back a signal representing the DC output voltage of the output rectifying and smoothing circuit connected with the secondary winding of the transformer, and controls the on-time and off-time of the switching transistor. This switching transistor controls the amount of energy coupled by the transformer. The feedback circuit controls the on-time and off-time of the switching transistor, and generates the stabilized DC voltage at the output of the power supply unit. An effort has been made to miniaturize each unit in the display workstation such as the personal computer, printer, auxiliary disk memory unit, image scanning device and the like. Each unit includes the power supply unit, which occupies a relatively large space in the unit. The simplest method for reducing the size of each unit is to mount the respective power supply units of the personal computer, printer, auxiliary disk memory unit and image scanning device in the space of the CRT display device. Although this method may reduce the size of each unit, the size of the CRT display device becomes large because of the relatively large size of the power supply unit in each unit. The inventor of the present invention has therefore tried to commonly use the rectifying and smoothing circuit for that in each power supply units. Namely, one rectifying and smoothing circuit converting the alternative voltage input into the DC bulk voltage is equipped in the space of the CRT display device and the DC bulk voltage is supplied to a plurality of power supply units provided in the space of this CRT display device. This method, however, causes the following problems. The inventor of the present invention has found that, in this arrangement, the plural power supply units are mutually coupled through the DC bulk input line and the switching frequencies of these plural power supply units are different from each other, resulting in an unexpected and unstable feedback occurring in each power supply unit.

Moreover, there has been known another problem of so-called a "rainfall effect" in the display on the CRT image screen due to a beat that a rises from the difference between the frequency of the horizontal deflection synchronizing pulse supplied to the CRT and the switching frequency of each power supply unit. A method for eliminating this problem is disclosed in the following papers: IBM technical disclosure bulletin, February 1987, Vol. 29, No. 9, pp. 3921 to 3922 and IBM technical disclosure bulletin, April 1987, Vol. 29, No. 11, pp.4948 to 4949.

### C. Means for solving the problems

The present invention is defined in the attached claims.

An object of the present invention is to provide a power supply unit capable of eliminating the foregoing unexpected and unstable feedback occurrence in the plural switching regulators provided in the same space and connected with the common DC bulk voltage, and the rainfall effect on the CRT display screen.

A power supply unit according to the present invention comprises a rectifying and smoothing circuit which receives an alternative voltage input through a filter circuit and generates a DC bulk voltage output, and at least a first and a second switching regulators, the input of which are connected with the DC bulk voltage output, the second switching regulator being operated at a second switching frequency, which is N or 1/N times (N is an integer equal to or larger than 1) a first switching frequency of the first switching regulator. Moreover, the first switching regulator generates a switching pulse of the first switching frequency

2

and includes first means generating a signal representing this first switching frequency. Furthermore, the second switching regulator receives the signal representing the first switching frequency and includes second means for generating a switching pulse of the second switching frequency, which is N or 1/N times (N is an integer equal to or larger than 1) the first switching frequency. The switching pulse of the first switching frequency is applied to a control terminal of the switching transistor in the first switching regulator, and controls the switching period of this switching transistor. The switching pulse of the second switching frequency is applied to a control terminal of the switching transistor in the second switching regulator, and controls the switching period of this switching transistor.

The first and second switching frequencies of the first and second switching regulators are selected at frequencies, which are N or 1/N times (N is an integer equal to or larger than 1) the frequency of the horizontal deflection synchronizing pulse supplied to the CRT of the CRT display device. To this end, the foregoing first means of the first switching regulator receives a horizontal deflection synchronizing pulse generated by the display control circuit, generates a switching pulse of the first switching frequency, supplies this switching pulse to the switching transistor in the first switching regulator, and supplies a signal representing the first switching frequency to the second means in the second switching regulator.

Furthermore, the CRT display device comprises a display control circuit for controlling the CRT, a rectifying and smoothing circuit for receiving an alternative input through the filter and generating the DC bulk voltage output, and at least the foregoing first and second switching regulators.

## D. Advantages of the invention

The present invention solves the problem which was found by the inventor and has been caused in a case where a plurality of switching regulators are connected to the common DC bulk voltage output of the noise filter 11 and the rectifying and smoothing circuit 12 (in Fig. 1). The problem occurs in the case that the common connections are made and the self-oscillation frequencies differ from each other, for example, 130 KHz and 125 KHz, as shown in the Table. The problem in this case is that beat phenomena caused by the difference of frequencies of noise peaks P, shown in the Figs. 3 and 4, generate complicated interference effects through the common connecting lines 35, 37 and 41, thereby making the feedback operation of each switching regulator unstable, and remarkably degrading the voltage stability of the switching operation.

The present invention solves the foregoing problem by operating the plural switching regulators commonly connected with the DC bulk voltage at the switching frequency, which is N or 1/N (N is an integer equal to or larger than 1) times that of the master switching regulator. Whereby, the power supplies of a plurality of units such as the personal computer, the CRT display device and the auxiliary disk memory device can be contained in the space of the CRT display devices. Since it becomes unnecessary to provide a power supply in the personal computer, the auxiliary disk memory device, etc., these units can be miniaturized.

Furthermore, the present invention solves the foregoing problem and the problem of the noise effect, so-called "rainfall effect" on the CRT display due to the beat frequency which is caused by the difference between the frequency of the horizontal deflection synchronizing pulse and the switching frequency of the switching regulator, by maintaining the switching frequencies of the master and the slave switching regulators in the "on" state of the horizontal deflection synchronizing pulse at the N or 1/N times and changing the switching frequency to one that is N or 1/N times the horizontal deflection synchronizing frequency.

## E. Brief Description of the Drawings:

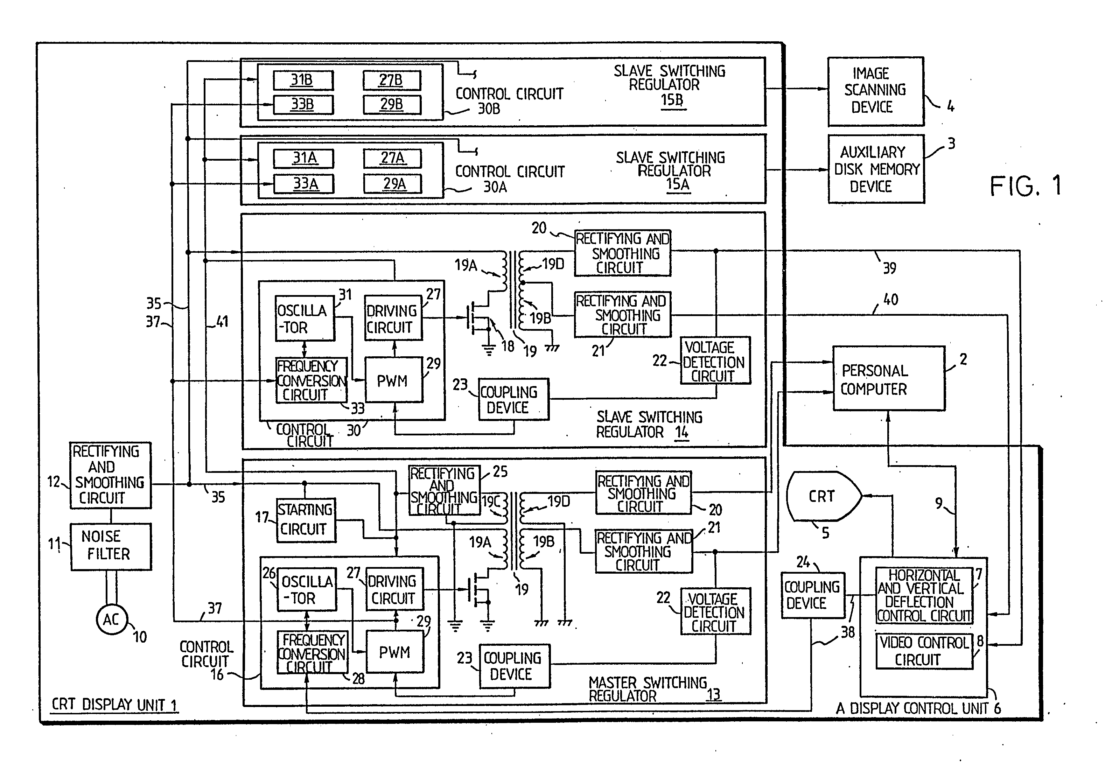

Fig. 1 is a block diagram representing a power supply unit according to the present invention;

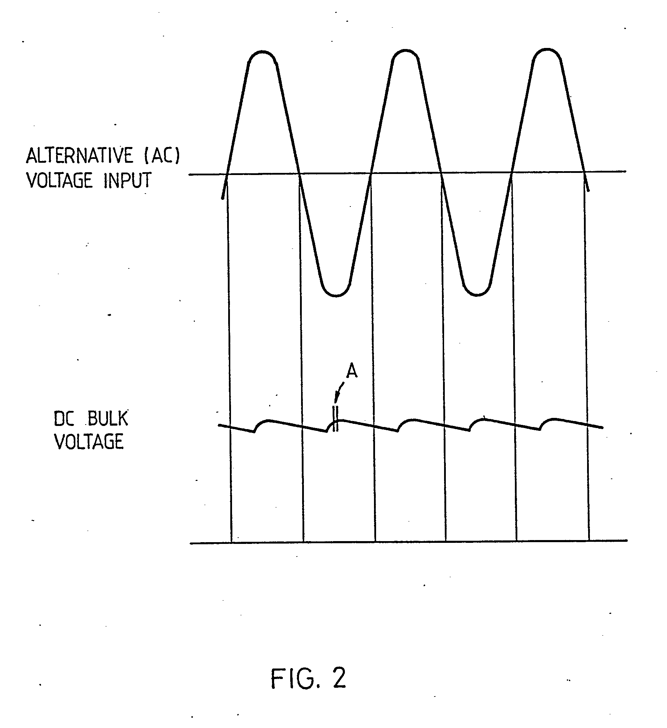

Fig. 2 shows the alternative voltage input and the DC bulk voltage;

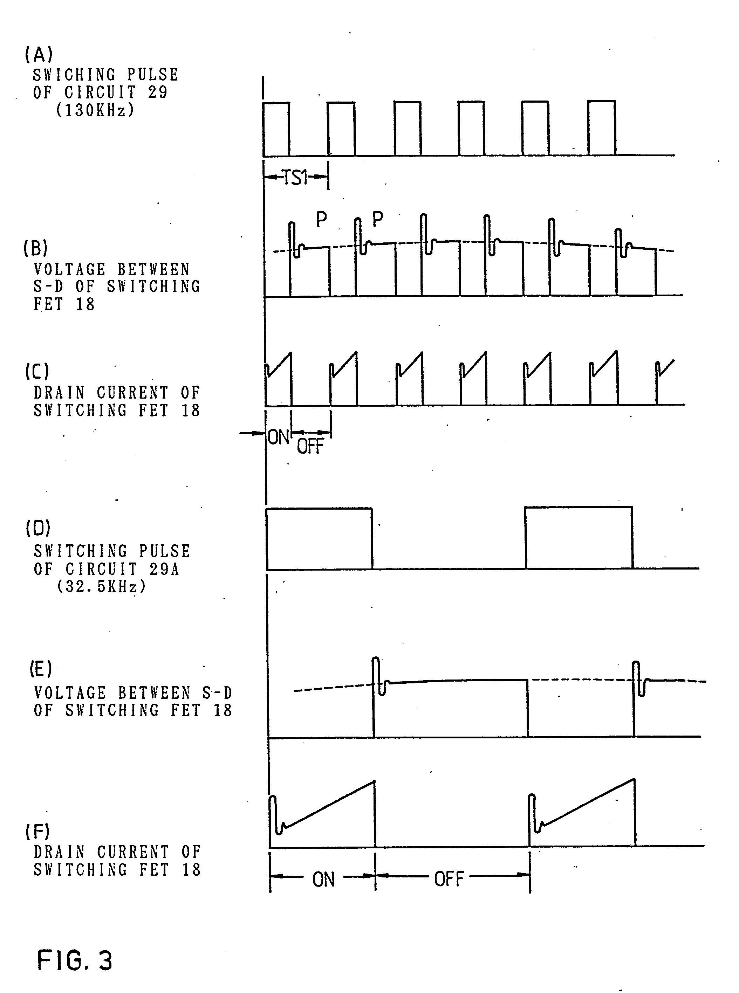

Fig. 3 shows waveforms when the horizontal deflection synchronizing pulse is "off"; and

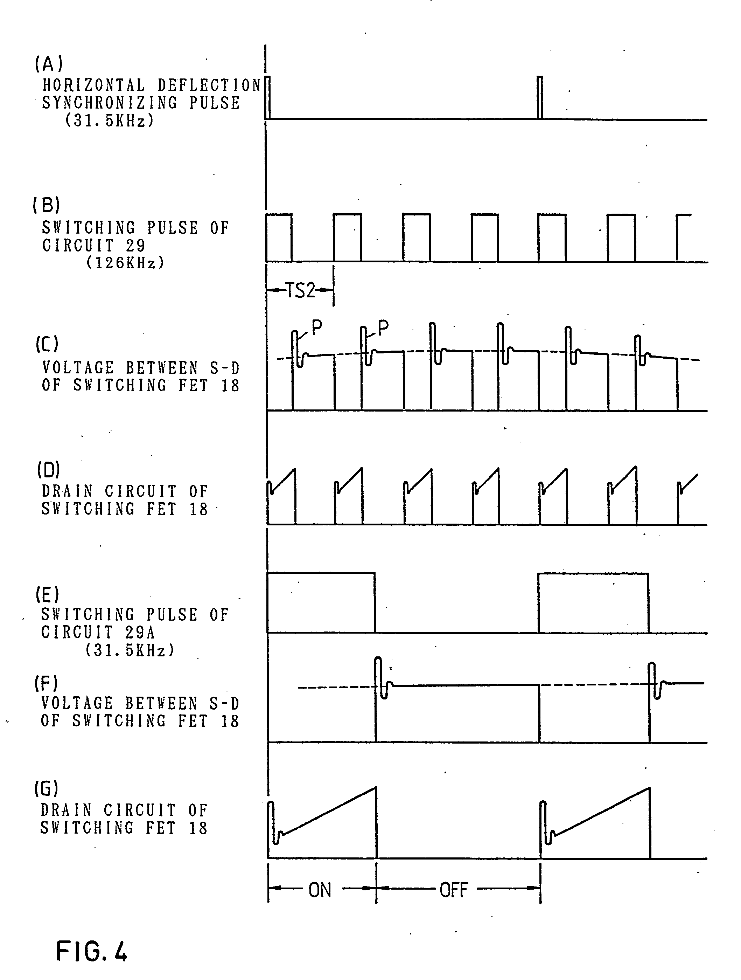

Fig. 4 shows waveforms when the horizontal deflection synchronizing pulse is "on".

## F. Description of the embodiment

Fig. 1 shows a CRT display device 1, a personal computer 2, an auxiliary disk memory device 3 and an image scanning device 4 to which a power supply, voltage is provided according to the invention. The CRT display device 1 includes a CRT 5, a display control circuit 6 and a power supply unit. The display control circuit 6 is a well-known standard type circuit, and includes a horizontal and vertical deflection control circuit 7 for controlling a horizontal deflection synchronizing pulse and a vertical deflection synchronizing pulse, and a video control circuit 8 for controlling the video signal. The video data, the horizontal synchronizing signal and the vertical synchronizing signal are supplied from the personal computer 2 to the display control circuit 6 through a line 9.

The power supply unit comprises a noise filter to which the alternative voltage input is supplied, a rectifying and smoothing circuit 12, a master switching regulator 13, and slave switching regulators 14, 15A and 15B.

The master switching regulator 13 comprises a control circuit 16, a starting circuit 17, a switching FET (Field effect transistor) 18, a transformer 19, rectifying and smoothing circuits 20 and 21, a voltage detection circuit 22, coupling devices 23 and 24, and a rectifying and smoothing circuit 25. The control circuit 16 includes an oscillator 26, a starting circuit 27, a frequency conversion circuit 28, and a pulse-width modulation circuit 29 (PWM).

The slave switching regulator 14 comprises a control circuit 30, a switching FET 18, a transformer 19, rectifying and smoothing circuits 20 and 21, a voltage detection circuit 22, and a coupling device 23. The control circuit 30 includes an oscillator 31, a driving circuit 27, a frequency conversion circuit 33, and a pulse-width modulation circuit (PWM) 29. The circuits designated by the same reference numerals perform the same operations in the master switching regulator 13 and the slave switching regulator 14. The slave switching regulators 15A and 15B have the same circuit as those in the slave switching regulator 14 and are therefore shown in a simplified manner in Fig. 1. The source terminal of the switching FET 18 in Fig. 1 is connected with the return circuit of the DC bulk voltage and the lower terminals of the secondary windings 19B and 19D are connected with the return circuit of the DC output voltage on the secondary winding side. The master switching regulator 13 operates as follows:

The operation of the master switching regulator 13 when the horizontal deflection synchronizing pulse (H Sync) is not supplied

The master switching regulator 13 performs the following operation when the display control circuit 6 of the CRT display device 1 is in the off-state, and the horizontal and vertical deflection control circuit 7 does not generate a signal representing the horizontal deflection synchronizing pulse on a line 38.

In response to the application of the alternative voltage, the rectifying and smoothing circuit 12 generates a DC bulk voltage on a line 35 as shown in Fig. 2. This DC bulk voltage is applied to the driving circuit 17 and the primary winding 19A of the transformer 19. Immediately after application of the DC bulk voltage, the starting circuit 17 supplies a starting voltage to the control circuit 16. When the master switching regulator 13 begins to operate, the secondary winding 19C of the transformer 19 and the rectifying and smoothing circuit 25 supply a normal operation voltage. The oscillator 26 oscillates at a self-oscillation frequency of $127 \pm 3$ kHz, for example, 130 kHz. The self-oscillation frequency of the oscillator 26 is selected in advance on the basis of the power of the personal computer connected with the master switching regulator 13 and the core size of the transformer 19. At that moment, the frequency conversion circuit 28 does not operate since the signal representing the horizontal deflection synchronizing frequency is not supplied to the frequency conversion circuit 28 through the line 38. The operations of the pulse-width modulation circuit (PWM) 29, the driving circuit 27, the switching FET 18, the transformer 19, the rectifying and smoothing circuits 20 and 21, the voltage detection circuit 22, and the coupling device 23 are well-known, and therefore the operations of these circuits will be only briefly described. PWM 29 generates a switching pulse shown by (A) in Fig. 3 for maintaining the DC output voltage of the master switching regulator 13 at a desired value in response to the feedback voltage fed through the voltage detection circuit 22 and the coupling device 23. Figs. 3 and 4 show a portion corresponding to the portion A of the DC bulk voltage in Fig. 2 but on a larger scale. Broken lines of (B) and (E) in Fig. 3, and (C) and (F) in Fig. 4 represent the DC bulk voltage waveform in Fig. 2. This switching pulse is applied to the switching FET 18 through the driving circuit 27 to control the turn-on time. Namely, the switching pulse controls the turn-on time of the switching FET 18 for each time TS1. These switching pulses are supplied to the respective frequency conversion circuits 33, 33A and 33B of the slave switching regulators 14, 15A and 15B through the line 37 as a signal representing the switching frequency (130 kHz).

The DC bulk voltage in Fig. 2 is converted into pulses with a switching frequency of 130 kHz shown by (C) in Fig. 3 by the on-off operation of the switching FET 18, and the converted pulses are applied to the primary winding 19A of the transformer 19 so that the desired voltages are generated at the secondary windings 19B, 19C and 19D. The voltages at the secondary windings 19B, 19C and 19D are converted into the DC voltage by the respective rectifying and smoothing circuits 21, 25 and 20.

Thus, when a signal indicating the horizontal deflection synchronizing pulse through the wire 38 is not supplied, the master switching regulator 13 operates at a switching frequency of 130 kHz, equal to the self-oscillation frequency of the oscillator 26. The signal indicating this switching frequency (pulse of (A) in Fig. 3) is supplied to the slave switching regulators 14, 15A and 15B through the wire 37.

The operation of the master switching regulator 13 when the horizontal deflection synchronizing pulse is supplied

When the display control circuit 6 of the CRT display device 1 is in the on-state, and the horizontal and vertical deflection control circuit 7 supplies the signal representing the horizontal deflection synchronizing pulse to the frequency conversion circuit 28 through the wire 38, the master switching regulator 13 operates as follows:

The frequency conversion circuit 28 supplies a pulse of a frequency, which is four times the input signal frequency, to the oscillator 26. In response to the signal representing the horizontal deflection synchronizing frequency of 31.5 kHz (pulse of (A) in Fig. 4), the frequency conversion circuit 28 supplies a 126 kHz pulse to the oscillator 26, thereby locking the oscillation frequency of the oscillator 26 at 126 kHz. The pulse-width modulation circuit (PWM) 29 receives the oscillation frequency of 126 kHz, and generates the switching pulse shown by (B) in Fig. 4 responsive to the feedback voltage for maintaining the DC output voltage at the desired value. This switching pulse is applied to the switching FET 18 through the driving circuit 27 to control the turn-on time. These switching pulses (pulse of (B) in Fig. 4) are fed to the respective frequency conversion circuits 33, 33A and 33B of the slave switching regulators 14, 15A and 15B through the wire 37 as the signal representing the switching frequency (126 kHz). The master switching regulator 13 operates based on the switching pulse of 126 kHz.

As described above, the switching frequency of the master switching regulator 13 is switched to 126 kHz at the time of generation of the horizontal deflection synchronizing pulse of 31.5 kHz.

The operations of the slave switching regulators 14, 15A and 15B are described below.

The slave switching regulator 14 is a power supply for the CRT display device 1 of the power consumption of about 50 W. The self-oscillation frequency of the oscillator 31 is $127 \pm 3$ kHz, for example, 125 kHz.

The frequency conversion circuit 33 of the slave switching regulator 14 receives the signal representing the switching frequency of the master switching regulator 13, and locks the oscillation frequency of the oscillator 31 at that frequency (that is, $N = 1$). In more detail, in response to the 130 kHz frequency on the output line 37 of the master switching regulator 13 when the horizontal deflection synchronizing pulse is not generated, the frequency conversion circuit 33 locks the oscillation frequency of the oscillator 31 at the frequency 130 kHz x 1 = 130 kHz. Thus, the slave switching regulator 14 operates at a switching frequency of 130 kHz. Moreover, in response to the 126 kHz frequency on the output line 37 of the master switching regulator 13 when the horizontal deflection synchronizing pulse is generated, the frequency conversion circuit 33 locks the oscillation frequency of the oscillator 31 at a frequency of 126 kHz x 1 = 126 kHz. Consequently, the slave switching regulator 14 operates at a switching frequency of 126 kHz.

The slave switching regulator 15A is a power supply for the auxiliary disk memory device 3 with a power consumption of about 15 W. The self-oscillation frequency of the oscillator 31A is $31 \pm 3$kHz, for example, 30 kHz.

The frequency conversion circuit 33A of the slave switching regulator 15A receives a signal representing the switching frequency of the master switching regulator 13, and locks the oscillation frequency of the oscillator 31A at the frequency a quarter (that is, $N = 4$) thereof. A more detailed explanation is given below. In response to the 130 kHz frequency on the output line 37 of the master switching regulator 13 when the horizontal deflection synchronizing pulse is not generated, the frequency conversion circuit 33A locks the oscillation frequency of the oscillator 31A at a frequency of 130 kHz x (1/4) = 32.5 kHz. Therefore, the slave switching regulator 15A operates at a switching frequency of 32.5 kHz. (D), (E) and (F) of Figure 3 show the switching pulse of the slave switching regulator 15A, and the turn-on and turn-off operations of the switching FET 18.

When the horizontal deflection synchronizing pulse is generated, the frequency conversion circuit 33A locks the oscillation frequency of the oscillation 31A at a frequency of 126 kHz x 1/4) = 31.5 kHz in response to the 126 kHz frequency on the line 37. Consequently, the slave switching regulator 15A operates at a switching frequency of 31.5 kHz. (E), (F) and (G) of Fig. 4 show the switching pulse of the slave switching regulator 15A, and the turn-on and turn-off operations of the switching FET 18.

The slave switching regulator 15B is a power supply for the image scanning device 4 of the power consumption of about 30 W. The self-oscillation frequency of the oscillator 31B is 63 ±3 KHz, for example, 62 kHz.

The frequency conversion circuit 33B of the slave switching regulator 15B receives the signal representing the switching frequency of the master switching regulator 13, and locks the oscillation frequency of the oscillator 31B at a frequency half (that is, N = 2) thereof. A more detailed description is given below. In response to the frequency of 130 kHz on the output line 37 of the master switching regulator 13 when the horizontal deflection synchronizing pulse is not generated, the frequency conversion circuit 33B locks the oscillation frequency of the oscillator 31B at a frequency of 130 kHz x (1/2) = 65 kHz. Thus, the slave switching regulator 15B operates at a switching frequency of 65 kHz. The waveforms representing the switching pulse of the slave switching regulator 15B, and the turn-on and turn-off operations of the switching FET 18 are apparent from the foregoing explanation and therefore are not shown.

When the horizontal deflection synchronizing pulse is generated, the frequency conversion circuit 33B, in response to the 126 kHz frequency on the line 37, locks the oscillation frequency of the oscillator 31B at a frequency of 126 kHz x (1/2) = 63 kHz. Therefore, the slave switching regulator 15B operates at a switching frequency of 63 kHz. The switching pulse of the slave switching regulator 15B, and the turn-on and turn-off operations of the switching FET 18 are apparent from the foregoing explanation and therefore are not shown.

In addition to the master and slave switching regulators shown in Fig. 1, the slave switching regulator of a power consumption of 120 W for the printer may be contained in the CRT display device 1 by connecting it with the lines 35, 37 and 41. This additional slave switching regulator has a self-oscillation frequency of 262 ± 3 kHz, for example, 265 kHz, and operates at a switching frequency (260 kHz) twice the switching frequency (130 kHz) of the master switching regulator when the horizontal deflection synchronizing pulse is in the off-state and operates at a switching frequency (252 kHz) eight times the switching frequency (31.5 kHz) of the horizontal deflection synchronizing frequency when the horizontal synchronizing pulse is in the on-state.

The following table shows the switch of the foregoing switching frequency of the master and slave switching regulators 13, 14, 15A and 15B.

Table

|  | Load | Self-oscillation Frequency | Horizontal Deflection Synchronizing Pulse (31.5 kHz) | | | |
|---|---|---|---|---|---|---|
|  |  |  | Switching Frequency at OFF-state | *1 | Switching Frequency at ON-state | *2 |
| Master Switching Regulator 13 | Personal Computer (70 W) | 130 kHz | 130 kHz | 1 | 126 kHz | 4 |
| Slave Switching Regulator 14 | CRT Display Device (50 W) | 125 kHz | 130 kHz | 1 | 126 kHz | 4 |
| Slave Switching Regulator 15A | Auxiliary Disk Memory Device (15 W) | 30 kHz | 32.5 kHz | 1/4 | 31.5 kHz | 1 |
| Slave Switching Regulator 15B | Image Scanning Device (30 W) | 62 kHz | 65 kHz | 1/2 | 63 kHz | 2 |
| Additional Slave Switching Regulator | Printer (120 W) | 265 kHz | 260 kHz | 2 | 252 kHz | 8 |

In the above table, *1 indicates the magnification for the switching frequency of the master switching regulator 13, and *2, for the horizontal deflection frequency.

Although the wiring is done so that all of the switching regulators operate when the alternative voltage is applied in Fig. 1, switches may be provided to the lines 35, 37 and 41 for selectively operating the slave switching regulators 15A and 15B. Upon receipt of the DC bulk voltage on the line 35, each switching regulator begins to oscillate at each self-oscillation frequency, and is locked at the switching frequency in the off-state or the on-state shown in the table immediately after the input signal is applied to each of the frequency conversion circuits. The time for the completion of the lock is within about one second.

The range of the self-oscillation frequencies of the oscillators 26, 31, 31A and 31B in the switching regulators are designed in advance within the error range which is 10% of the switching frequency in the on-state as shown in the right-hand column of the table.

The high resolution CRT display device employs a horizontal deflection synchronizing frequency ranging from 60 kHz to 120 kHz and the switching frequency of the auxiliary disk memory device is a half or a quarter (that is, N or 1/N (N is an integer equal to or larger than 1)) of the horizontal deflection synchronizing frequency. In the above table, there are shown examples of the switching frequency of the switching regulator is N times the horizontal deflection synchronizing frequency but 1/N switching frequency may be used.

The coupling device is, for example, a light coupling circuit, a pulse transformer or the like.

The secondary winding 19C and the rectifying and smoothing circuit 25 of the master switching regulator 13 supply the operation voltage to the master and slave switching regulators 13, 14, 15A and 15B, and the additional slave switching regulator through the line 41. Thus, it becomes unnecessary to provide the rectifying and smoothing circuit in each slave switching regulator, by providing the operation voltage supply source in the master switching regulator 13, making it possible to miniaturize the whole power supply unit.

## Claims

(1) A power supply device comprising a rectifying and smoothing circuit (12) which receives an alternating voltage input and generates a DC bulk voltage output, and a first (13) and a second (14, 15) switching regulators, the inputs of which are connected with said DC bulk voltage output, said second switching regulator being operated at a second switching frequency, which is N or 1/N times (N is an integer equal to or larger than 1) the first switching frequency of said first switching regulator.

(2) A power supply device as set forth in claim (1), wherein said first switching regulator includes a means for generating a signal of said first switching frequency.

(3) A power supply device as set forth in claim (1), wherein said first switching regulator includes a means for generating a signal representing said first switching frequency.

(4) A power supply device as set forth in claim (1), wherein said second switching regulator includes a means for receiving a signal representing said first switching frequency and generating a signal of said second switching frequency, which is N or 1/N times (N is an integer equal to or larger than 1) said first switching frequency.

(5) A power supply device as set forth in claim (1), wherein the signal of said first switching frequency controls a switching element of said first switching regulator and the signal of said second switching frequency controls a switching element of said second switching frequency.

(6) A power supply device comprising a rectifying and smoothing circuit which receives an alternative voltage input and generates a DC bulk voltage output, and a first and a second switching regulators, the input of which are connected with said DC bulk voltage output, the switching frequencies of said first and second switching regulators being N or 1/N times (N is an integer equal to or larger than 1) a horizontal deflection synchronizing frequency of a display control circuit.

(7) A power supply device as set forth in claim (6), wherein said first switching regulator includes a means for receiving a signal representing a horizontal deflection synchronizing signal from said display control circuit and generating a signal of said first switching frequency and a signal representing said first switching frequency.

(8) A power supply device as set forth in claim (6), wherein said second switching regulator includes a means for receiving a signal representing said first switching frequency and generating a signal of a second switching frequency, which is N or 1/N times (N is an integer equal to or larger than 1) said horizontal deflection synchronizing frequency.

(9) A power supply device as set forth in claim (6), wherein the signal of said first switching frequency controls a switching element of said first switching regulator and the signal of said second switching frequency controls a switching element of said second switching regulator.

(10) A CRT display apparatus comprising:

a CRT;

a display control circuit for controlling said CRT display apparatus,

a rectifying and smoothing circuit which receives an alternating voltage input and generates a DC bulk voltage output; and

a first and a second switching regulators the inputs of which are connected with said DC bulk voltage output, the switching frequency of said first switching regulator being N or 1/N times (N is an integer equal to or larger than 1) the switching frequency of said second switching regulator.

(11) A CRT display apparatus as set forth in claim (10), wherein the switching frequencies of said first and second switching regulators are N or 1/N times (N is an integer equal to or larger than 1) the horizontal deflection synchronizing frequency of said display control circuit.

FIG. 1

EP 0 370 980 A2

ALTERNATIVE (AC) VOLTAGE INPUT

DC BULK VOLTAGE

A

FIG. 2

(A)
SWICHING PULSE
OF CIRCUIT 29
(130KHz)

TS1

(B)
VOLTAGE BETWEEN
S-D OF SWITCHING
FET 18

P    P

(C)
DRAIN CURRENT OF
SWITCHING FET 18

ON  OFF

(D)
SWITCHING PULSE
OF CIRCUIT 29A
(32.5KHz)

(E)
VOLTAGE BETWEEN S-D
OF SWITCHING FET 18

(F)
DRAIN CURRENT OF
SWITCHING FET 18

ON    OFF

FIG. 3

(A)
HORIZONTAL DEFLECTION
SYNCHRONIZING PULSE
(31.5KHz)

(B)
SWITCHING PULSE OF
CIRCUIT 29
(126KHz)

←TS2→

(C)
VOLTAGE BETWEEN S-D
OF SWITCHING FET 18

P    P

(D)
DRAIN CIRCUIT OF
SWITCHING FET 18

(E)
SWITCHING PULSE OF
CIRCUIT 29A
(31.5KHz)

(F)
VOLTAGE BETWEEN S-D
OF SWITCHING FET 18

(G)
DRAIN CIRCUIT OF
SWITCHING FET 18

←— ON —→ ←— OFF —→

FIG. 4